(19) Europäisches Patentamt
European Patent Office
Office européen des brevets

(11) EP 4 597 640 A1

(12) **EUROPEAN PATENT APPLICATION**
published in accordance with Art. 153(4) EPC

(43) Date of publication:
**06.08.2025 Bulletin 2025/32**

(21) Application number: **23872043.7**

(22) Date of filing: **19.09.2023**

(51) International Patent Classification (IPC):
***H01M 4/66*** *(2006.01)* ***H01M 4/13*** *(2010.01)*
***H01M 4/62*** *(2006.01)*

(52) Cooperative Patent Classification (CPC):
**H01M 4/13; H01M 4/62; H01M 4/66;** Y02E 60/10

(86) International application number:
**PCT/JP2023/033923**

(87) International publication number:
**WO 2024/070815 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156630**

(71) Applicant: **Kureha Corporation**
**Chuo-ku**
**Tokyo 103-8552 (JP)**

(72) Inventors:
- **YAMAKAWA, Yuichiro**
**Tokyo 103-8552 (JP)**
- **SATO, Hiroshi**
**Tokyo 103-8552 (JP)**
- **IKEYAMA, Yasufumi**
**Tokyo 103-8552 (JP)**
- **OKADA, Kayoko**
**Tokyo 103-8552 (JP)**

(74) Representative: **Zimmermann & Partner Patentanwälte mbB**
**Postfach 330 920**
**80069 München (DE)**

(54) **CURRENT COLLECTOR, PRODUCTION METHOD FOR SAME, ELECTRODE, AND BATTERY**

(57) An object of the present invention is to provide a current collector in which cracking and the like hardly occur in a mixture layer at the time of preparing an electrode. A current collector for solving the above issues is a current collector including: a substrate containing a metal; and a coating layer disposed on at least one surface of the substrate. **The** coating layer contains a vinylidene fluoride polymer A and a conductive auxiliary. **The** vinylidene fluoride polymer A contains a structural unit derived from vinylidene fluoride and a structural unit derived from a compound having a specific structure.

EP 4 597 640 A1

## Description

### TECHNICAL FIELD

The present invention relates to a current collector, a method for producing the current collector, an electrode, and a battery.

### BACKGROUND ART

Lithium ion secondary batteries are widely used in various electronic devices, electric vehicles, and the like. An electrode of the lithium ion secondary battery generally includes a current collector and a mixture layer disposed on the current collector, and the mixture layer contains an active material and a binder.

In recent years, there has been a demand for increasing the capacity of the lithium ion secondary battery, and for example, attempts have been made to increase the capacity of a lithium ion secondary battery by charging at a high voltage. Besides, it has also been studied to form a layer having conductivity (hereinafter, the layer is also referred to as a "conductive layer") between the current collector and the mixture layer to reduce electrical resistance at an interface between the current collector and the mixture layer. For example, it has been proposed to dispose a layer containing acid-modified polyvinylidene fluoride, polyvinylpyrrolidone, and a powdery carbon material by methyl acrylate, methyl methacrylate, and the like on a surface of the current collector (Patent Document 1). There has also been proposed a current collector in which a resin layer containing a copolymer of acrylic acid and vinylidene fluoride and conductive particles is provided on a surface of a conductive substrate (Patent Document 2).

### CITATION LIST

### PATENT DOCUMENT

Patent Document 1: JP 6529700 B
Patent Document 2: WO 2013/151046

### SUMMARY OF INVENTION

### TECHNICAL PROBLEM

However, as a result of intensive studies by the present inventors, it has become clear that when a layer containing acid-modified polyvinylidene fluoride described in Patent Document 1 or a layer containing the copolymer of acrylic acid and vinylidene fluoride described in Patent Document 2 is formed between the conductive substrate and the mixture layer at the time of preparing an electrode, cracking is likely to occur in the mixture layer at the time of preparing the electrode.

Thus, an object of the present invention is to provide a current collector in which cracking hardly occurs in a mixture layer at the time of preparing an electrode, a method for producing the current collector, an electrode using the current collector, and a battery.

### SOLUTION TO PROBLEM

The present invention provides a current collector including: a substrate containing a metal; and a coating layer disposed on at least one surface of the substrate. The coating layer contains a vinylidene fluoride polymer A and a conductive auxiliary. The vinylidene fluoride polymer A contains a structural unit derived from vinylidene fluoride and a structural unit derived from a compound represented by the following general formula (1).

[Chem. 1]

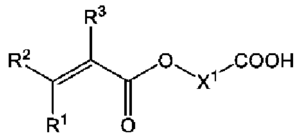

(1)

(In the general formula (1), $R^1$, $R^2$, and $R^3$ each independently represent a hydrogen atom, a chlorine atom, a fluorine atom, or an alkyl group having 1 or more and 5 or less carbon atoms, and $X^1$ represents a divalent atomic group having a molecular weight of 156 or less, and the divalent atomic group has a main chain having 1 or more and 6 or less atoms.)

Further, the present invention provides an electrode including the current collector and a mixture layer disposed on the coating layer of the current collector. The mixture layer contains an active material and a binder. Furthermore, the present invention provides a battery including the electrode.

The present invention provides a method for producing a current collector. The method includes applying a coating liquid to at least one surface of a substrate containing a metal. The coating liquid contains a vinylidene fluoride polymer a and a solvent. The vinylidene fluoride polymer a contains a structural unit derived from vinylidene fluoride and a structural unit derived from a compound represented by the following general formula (1a).

[Chem. 2]

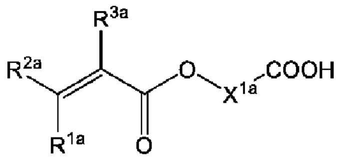

(1a)

(In the general formula (1a), $R^{1a}$, $R^{2a}$, and $R^{3a}$ each independently represent a hydrogen atom, a chlorine atom, a fluorine atom, or an alkyl group having 1 or more and 5 or less carbon atoms, and $X^{1a}$ represents a divalent atomic group having a molecular weight of 156 or less, and the divalent atomic group has a main chain having 1 or more and 6 or less atoms.)

## ADVANTAGEOUS EFFECTS OF INVENTION

In the current collector of the present invention, when a mixture layer is formed on the current collector, cracking hardly occurs in the mixture layer. Therefore, the current collector and the electrode using the current collector are suitable as members of various lithium ion secondary batteries.

## DESCRIPTION OF EMBODIMENTS

1. Current collector

The current collector of the present invention is a current collector for use in a lithium ion secondary battery and the like, and is usually used by forming a mixture layer on the current collector. In addition, the current collector of the present invention includes a substrate containing a metal and a coating layer disposed on at least one surface of the substrate, and the coating layer contains a vinylidene fluoride polymer A and a conductive auxiliary. The vinylidene fluoride polymer A contains a structural unit derived from vinylidene fluoride and a structural unit derived from a compound represented by the following general formula (1).

[Chem. 3]

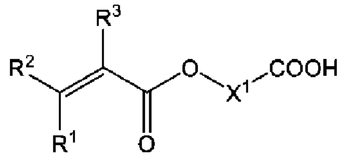

(1)

(In the general formula (1), $R^1$, $R^2$, and $R^3$ each independently represent a hydrogen atom, a chlorine atom, a fluorine atom, or an alkyl group having 1 or more and 5 or less carbon atoms, and $X^1$ represents a divalent atomic group having a molecular weight of 156 or less, and the divalent atomic group has a main chain having 1 or more and 6 or less atoms.)

As described above, in the current collector in which a coating layer containing a copolymer of vinylidene fluoride and acrylic acid or monomethyl maleate is formed on the substrate, when a mixture layer is formed on the coating layer, cracking is likely to occur on a surface of the mixture layer. The reason for this is uncertain but is considered as follows.

It is considered that when a copolymer of acrylic acid, monomethyl maleate, or the like and vinylidene fluoride is dissolved or dispersed in a solvent in the presence of a conductive auxiliary, the copolymer has a property (cohesive force) of being very likely to aggregate when the solvent volatilizes. The cohesive force is attributed to the fact that a structural unit derived from vinylidene fluoride and a carboxy group derived from acrylic acid, monomethyl maleate, and the like are arranged close to each other. When a mixture slurry (composition for forming a mixture layer) is applied onto a coating layer containing such a copolymer, some of the copolymer is eluted into a solvent in the mixture slurry. Then, the eluted copolymer aggregates when the solvent volatilizes again and precipitates, and forms an island-like region on a surface of the substrate. As a result, it is considered that distortion occurs inside the mixture layer formed on the region, and cracking occurs on the surface of the mixture layer.

In contrast, in a copolymer of the compound represented by the general formula (1) and vinylidene fluoride, a structural unit derived from vinylidene fluoride and a carboxy group derived from the compound represented by the general formula (1) are arranged at positions relatively distant from each other.

Thus, even when the copolymer is eluted in the solvent in the mixture slurry, a large cohesive force is hardly generated, and the above-described island-like region is hardly formed. As a result, it is considered that cracking hardly occurs on the surface of the resulting mixture layer.

Hereinafter, a configuration of the current collector of the present invention will be described in detail.

(1) Substrate

The substrate has a configuration serving as a base of the current collector, and the substrate only needs to have sufficient conductivity and contain metal. The substrate may contain only metal, or may contain a material other than metal (for example, resin, ceramics, and the like). The substrate is more preferably composed only of metal. Here, the type of metal contained in the substrate is appropriately selected according to the type, shape, and the like of the battery. The substrate may contain only one type of metal or may contain two or more types of metals. Examples of the metal contained in the substrate include aluminum, copper, iron, stainless steel, steel, nickel, and titanium.

The shape of the substrate is appropriately selected according to the type, size, and the like of the battery. The substrate may be, for example, the metal foil or metal mesh. In addition, the substrate may be a material prepared by stacking the metal foil, a metal net, or the like on a surface of a material other than metal.

(2) Coating layer

The coating layer only needs to contain at least the vinylidene fluoride polymer A and the conductive auxiliary, and may contain other components as necessary. When the coating layer contains the vinylidene fluoride polymer A and the conductive auxiliary, resistance between the substrate and the mixture layer can be reduced.

- Vinylidene fluoride polymer A

The vinylidene fluoride polymer A is a polymer containing the structural unit derived from vinylidene fluoride and a structural unit derived from a compound represented by the following general formula (1). The coating layer may contain only one type of the vinylidene fluoride polymers A or may contain two or more types of the vinylidene fluoride polymers A.

The vinylidene fluoride polymer A may contain only the structural unit derived from vinylidene fluoride and the structural unit derived from the compound represented by the general formula (1), or may partially contain a structural unit

derived from a compound other than these structural units.

The amount of the structural unit derived from vinylidene fluoride in the vinylidene fluoride polymer A is preferably 90.0 mol% or more and 99.99 mol% or less, more preferably 93.0 mol% or more and 99.98 mol% or less, and particularly preferably 96.0 mol% or more and 99.97 mol% or less with respect to the amount (mol) of all structural units included in the vinylidene fluoride polymer A. When the amount of the structural unit derived from vinylidene fluoride is 90.0 mol% or more, properties derived from vinylidene fluoride, for example, electrochemical stability is easily achieved in the coating layer. The amount of the structural unit derived from vinylidene fluoride in the vinylidene fluoride polymer A can be determined by, for example, the $^{19}F$-NMR analysis or the like.

Next, the general formula (1) will be shown below. The vinylidene fluoride polymer A may contain only one type of the structural unit or two or more types of the structural units derived from the compound represented by the general formula (1).

[Chem. 4]

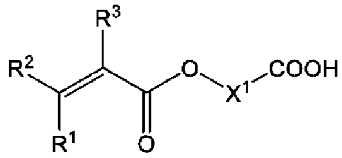

(1)

In the general formula (1), $R^1$, $R^2$, and $R^3$ each independently represent a hydrogen atom, a chlorine atom, a fluorine atom, or an alkyl group having 1 or more and 5 or less carbon atoms. However, from the viewpoint of polymerization reactivity, $R^1$ and $R^2$ are preferably substituents with small steric hindrance, preferably hydrogen or an alkyl group having 1 or more and 3 or less carbon atoms, and preferably hydrogen or a methyl group.

In addition, $X^1$ in the general formula (1) represents a divalent atomic group having a molecular weight of 156 or less, and the divalent atomic group has a main chain having 1 or more and 6 or less atoms. In the present specification, the number of atoms of the main chain of $X^1$ is the number of atoms of a shortest chain connecting a terminal carboxy group in the general formula (1) and a -C(=O)O- group. With the main chain of the atomic group represented by $X^1$ having 1 or more atoms, as described above, even when the vinylidene fluoride polymer A is dissolved in a solvent, a large cohesive force is hardly generated, and cracking is hardly generated in the mixture layer. In contrast, with the main chain having 6 or less atoms, copolymerizability with vinylidene fluoride is improved.

As long as the atomic group represented by $X^1$ has a molecular weight of 156 or less and satisfies the number of atoms of the main chain, the structure thereof is not particularly limited, and may be linear or branched, or may contain a ring structure. Examples of the structure constituting the atomic group include an alkylene group, a carbonyl group (-C(=O)-), an ether bond (-O-), an aromatic ring, and an alicyclic structure.

Specific examples of the compound represented by the general formula (1) include carboxymethyl acrylate, carboxymethyl methacrylate, 2-carboxyethyl acrylate, 2-carboxyethyl methacrylate, acryloyloxyethyl succinic acid, methacryloyloxyethyl succinic acid, acryloyloxyethyl phthalic acid, methacryloyloxyethyl phthalic acid, acryloyloxypropyl succinic acid, and methacryloyloxypropyl succinic acid. Among them, 2-carboxyethyl acrylate, 2-carboxyethyl methacrylate, acryloyloxyethyl succinic acid, methacryloyloxyethyl succinic acid, acryloyloxypropyl succinic acid, and methacryloyloxypropyl succinic acid are particularly preferable because they are excellent in copolymerizability with vinylidene fluoride, and cracking hardly occurs in the mixture layer formed on the coating layer.

The amount of the structural unit derived from the compound represented by the general formula (1) in the vinylidene fluoride polymer A is preferably 0.01 mol% or more and 10.0 mol% or less, more preferably 0.02 mol% or more and 7.0 mol% or less, and particularly preferably 0.03 mol% or more and 4.0 mol% or less with respect to the amount (mol) of all structural units included in the vinylidene fluoride polymer A. When the amount of the structural unit derived from the compound represented by the general formula (1) is 0.01 mol% or more, adhesive strength between the coating layer and the substrate and adhesive strength between the coating layer and the mixture layer are increased. In contrast, when the amount of the structural unit derived from the compound represented by the general formula (1) is 10.0 mol% or less, the amount of the structural unit derived from vinylidene fluoride relatively increases, and the electrochemical stability of the coating layer tends to be good. The amount of the structural unit derived from the compound represented by the general formula (1) in the vinylidene fluoride polymer A can be analyzed by $^{19}F$-NMR, $^{1}H$-NMR, and the like.

The vinylidene fluoride polymer A may contain a structural unit derived from a compound other than vinylidene fluoride and the compound represented by the general formula (1) (hereinafter, also referred to as "additional compound") in some parts in the range that does not impair the object and effect of the present invention. However, the amount of structural units derived from additional compounds is preferably 9.99 mol% or less with respect to the amount (mol) of all structural units included in the vinylidene fluoride polymer A. When the amount of the structural units derived from

additional compounds in the vinylidene fluoride polymer A is 9.99 mol% or less, the electrochemical stability of the coating layer is improved, and the adhesive strength between the coating layer and the substrate is easily improved. The amount of structural units derived from additional compounds can be analyzed by $^{19}F$-NMR, $^{1}H$-NMR, and the like.

Examples of additional compounds include fluorine-based compounds other than vinylidene fluoride, such as perfluoroalkyl vinyl ethers such as vinyl fluoride, trifluoroethylene, tetrafluoroethylene, chlorotrifluoroethylene, hexafluoropropylene, hexafluoroethylene, fluoroalkyl vinyl ether, and perfluoromethyl vinyl ether; monomethyl maleate (MMM), acrylic acid (AA), and methacrylic acid.

Here, an inherent viscosity of the vinylidene fluoride polymer A is preferably 1.0 or more, more preferably 1.3 dL/g or more, and still more preferably 2.0 dL/g or more. When the inherent viscosity is as described above, the adhesive strength between the coating layer and the substrate and the adhesive strength between the coating layer and the mixture layer formed on the coating layer are easily increased. The inherent viscosity can be measured by the following method. First, the viscosity is measured by dissolving 80 mg of the vinylidene fluoride polymer A in 20 mL of N,N-dimethylformamide, and using an Ubbelohde viscometer in a 30°C thermostatic bath. Subsequently, based on the measured value, the inherent viscosity ($\eta_i$) of the vinylidene fluoride polymer was calculated by the following equation:

$$\eta_i = (1/C)\cdot\ln(\eta/\eta_0)$$

In the equation, $\eta$ is a viscosity of the solution, $\eta_0$ is a viscosity of N,N-dimethylformamide alone, which is a solvent, and C is a concentration of the vinylidene fluoride polymer A, that is, 0.4 g/dL.

The method for preparing the vinylidene fluoride polymer A is not particularly limited, and vinylidene fluoride and the compound represented by the general formula (1) may be polymerized by a known method. Examples of the polymerization method include suspension polymerization, emulsion polymerization, and solution polymerization.

The amount of the vinylidene fluoride polymer A in the coating layer is preferably 65 parts by mass or less, more preferably 60 parts by mass or less, and still more preferably 55 parts by mass or less when a total amount of the vinylidene fluoride polymer A and the conductive auxiliary in the coating layer is 100 parts by mass. When the amount of the vinylidene fluoride polymer A is in the above range, the vinylidene fluoride polymer A more hardly affects the mixture layer when the mixture layer is formed on the coating layer, and a high quality mixture layer is easily produced. The amount of the vinylidene fluoride polymer A is preferably 5 parts by mass or more, more preferably 15 parts by mass or more, and still more preferably 25 parts by mass or more. When the amount of the vinylidene fluoride polymer A is in the above range, the adhesive strength between the substrate and the coating layer and the adhesive strength between the coating layer and the mixture layer tend to be good.

- Conductive auxiliary

The conductive auxiliary plays a role of electrically conducting the substrate and the active material in the mixture layer. As the conductive auxiliary, a known conductive auxiliary can be used. Specific examples of the conductive auxiliary include acetylene black, Ketjen Black, carbon black, graphite powder, graphene, carbon nanofibers, carbon nanotubes, carbon fibers, and metal powder. The coating layer may contain only one type of conductive auxiliary or may contain two or more types of the conductive auxiliaries.

The amount of the conductive auxiliary in the coating layer is preferably 35 parts by mass or more, more preferably 40 parts by mass or more, and still more preferably 45 parts by mass or more when the total amount of the vinylidene fluoride polymer A and the conductive auxiliary in the coating layer is 100 parts by mass. When the amount of the conductive auxiliary is 45 parts by mass or more, electrical resistance between the substrate and the mixture layer is easily reduced. The amount of the conductive auxiliary in the coating layer is preferably 95 parts by mass or less when the total amount of the vinylidene fluoride polymer A and the conductive auxiliary in the coating layer is 100 parts by mass. When the amount of the conductive auxiliary is 95 parts by mass or less, the amount of the vinylidene fluoride polymer A relatively increases, and the adhesive strength between the substrate and the coating layer and the adhesive strength between the coating layer and the mixture layer are easily increased.

- Others

In addition to the vinylidene fluoride polymer A and the conductive auxiliary described above, the coating layer may contain other components in the range that does not impair the object and effect of the present invention. Examples of other components include known dispersants such as acrylic acid copolymers, carboxymethyl cellulose, polyvinyl alcohol, and polyvinyl pyrrolidone. Examples thereof further include phosphorus compounds, sulfur compounds, organic acids, and nitrogen compounds such as amine compounds and ammonium compounds; organic esters, various silane-based, titanium-based, and aluminum-based coupling agents; and resins such as polytetrafluoroethylene (PTFE), styrene-butadiene rubber (SBR), and polyacrylonitrile (PAN). However, the amount of the other component is preferably 10 parts by mass or less, and more preferably 5 parts by mass or less when the total amount of the vinylidene fluoride polymer A and the conductive auxiliary in the coating layer is 100 parts by mass.

- Physical properties of coating layer

The coating layer only needs to be disposed on one surface of the substrate described above, and may be formed on both surfaces. In addition, the coating layer may be arranged in a pattern on one surface of the substrate, and it is preferable that the coating layer be arranged so as to entirely cover one surface or both surfaces of the substrate from the viewpoint of easily suppressing cracking of the mixture layer or reducing electrical resistance between the mixture layer and the substrate.

The thickness of the coating layer on at least one surface of the substrate is preferably 0.5 μm or more and 10 μm or less, and more preferably 0.8 μm or more and 5 μm or less. When the thickness of the coating layer is 0.5 μm or more, the adhesive strength between the coating layer and the mixture layer tends to be good. In contrast, when the thickness of the coating layer is 10 μm or less, an energy density of the battery using the coating layer can be increased.

(3) Method for producing current collector

The method for producing a current collector of the present invention is not particularly limited as long as it is a method capable of forming a coating layer on the substrate described above, and is preferably a method including applying a coating liquid to at least one surface of the substrate (hereinafter, this is also referred to as "application step") and drying the coating liquid (hereinafter, this is also referred to as "drying step"). Each step will be described below.

- Application step

The coating liquid applied in the application step only needs to contain at least a vinylidene fluoride polymer a, a solvent, and a conductive auxiliary, and may further contain a dispersant and the like.

The vinylidene fluoride polymer a contained in the coating liquid contains a structural unit derived from vinylidene fluoride and a structural unit derived from a compound represented by the following general formula (1a).

[Chem. 5]

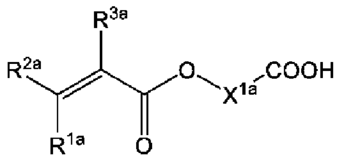

(1a)

In the general formula (1a), $R^{1a}$, $R^{2a}$, and $R^{3a}$ each independently represent a hydrogen atom, a chlorine atom, a fluorine atom, or an alkyl group having 1 or more and 5 or less carbon atoms. $R^{1a}$, $R^{2a}$, and $R^{3a}$ are the same as $R^1$, $R^2$, and $R^3$ in the general formula (1). In addition, $X^{1a}$ in the general formula (1a) represents a divalent atomic group having a molecular weight of 156 or less and the divalent atomic group has a main chain having 1 or more and 6 or less atoms, and $X^{1a}$ is the same as $X^1$ in the general formula (1). That is, the compound represented by the general formula (1a) corresponds to the compound represented by the general formula (1).

The inherent viscosity of the vinylidene fluoride polymer a (vinylidene fluoride polymer A) is preferably 1.0 dL/g or more, more preferably 1.3 dL/g or more, and still more preferably 2.0 dL/g or more. When the inherent viscosity is equal to or more than the above value, the adhesive strength between the resulting coating layer and the mixture layer disposed on the coating layer is easily increased.

The amount of the vinylidene fluoride polymer a in the coating liquid is preferably 65 parts by mass or less, more preferably 60 parts by mass or less, and still more preferably 55 parts by mass or less when the total amount of the vinylidene fluoride polymer a and the conductive auxiliary in the coating liquid is 100 parts by mass. When the amount of the vinylidene fluoride polymer a is in the above range, the amount of the conductive auxiliary is relatively sufficient. The amount of the vinylidene fluoride polymer a is preferably 5 parts by mass or more, more preferably 15 parts by mass or more, and still more preferably 25 parts by mass or more. When the amount of the vinylidene fluoride polymer a is in the above range, the vinylidene fluoride polymer a can sufficiently bind the conductive auxiliary, and the adhesive strength

between the substrate and the coating layer is easily increased, or the adhesive strength between the coating layer and the mixture layer is easily increased.

In contrast, the conductive auxiliary contained in the coating liquid is the same as the conductive auxiliary described above. The amount of the conductive auxiliary in the coating liquid is preferably 35 parts by mass or more, more preferably 40 parts by mass or more, and still more preferably 45 parts by mass or more when the total amount of the vinylidene fluoride polymer a and the conductive auxiliary in the coating liquid is 100 parts by mass. When the amount of the conductive auxiliary is in the above range, a coating layer having low electrical resistance is easily produced. The amount of the conductive auxiliary in the coating liquid is preferably 95 parts by mass or less, more preferably 85 parts by mass or less, and still more preferably 80 parts by mass or less when the total amount of the vinylidene fluoride polymer a and the conductive auxiliary in the coating liquid is 100 parts by mass. When the amount of the conductive auxiliary is in the above range, the amount of the vinylidene fluoride polymer is relatively sufficient.

The solvent contained in the coating liquid may be any solvent as long as it can uniformly disperse or dissolve the vinylidene fluoride polymer a and the conductive auxiliary. Examples of the solvent include water; amide compounds, such as dimethylformamide, N,N-dimethylacetamide, and N-methylpyrrolidone; alcohols, such as methanol, ethanol, isopropyl alcohol, 2-ethyl-1-hexanol, 1-nonanol, lauryl alcohol, and tripropylene glycol; amine compounds, such as o-toluidine, m-toluidine, and p-toluidine; 1-ethyl-3-methylimidazolium bis(trifluoromethylsulfonyl) imide; lactones, such as $\gamma$-butyrolactone and $\delta$-butyrolactone; and sulfoxide and sulfone compounds, such as dimethyl sulfoxide and sulfolane. The coating liquid may contain only one type of the solvent or two or more types of the solvents. Among them, N-methylpyrrolidone is preferable in that the vinylidene fluoride polymer a can be easily dissolved.

The amount of the solvent is appropriately selected according to the type of the solvent, the desired viscosity of the coating liquid, and the like, and is usually preferably 1000 parts by mass or more and 10000 parts by mass or less, and more preferably 3000 parts by mass or more and 7000 parts by mass or less with respect to 100 parts by mass of the total amount of the vinylidene fluoride polymer a and the conductive auxiliary.

The method of applying the coating liquid to the substrate is not particularly limited, and a doctor blade method, a reverse roll method, a comma bar method, a gravure method, an air knife method, a die coating method, a dip coating method, or the like can be employed.

- Drying step

After the coating liquid is applied, the coating liquid is heated at an appropriate temperature to volatilize the solvent, and thus to produce a coating layer. The heating temperature is not particularly limited, and in one example, the heating temperature is preferably 60°C or higher, and more preferably 80°C or higher. The upper limit is appropriately selected according to the type of solvent. The heating may be performed multiple times at different temperatures. The drying step may be performed under any environment of atmospheric pressure, pressure, and reduced pressure.

2. Electrode

The electrode of the present invention includes the current collector described above and a mixture layer containing an active material and a binder, and the mixture layer is disposed on the current collector. The mixture layer only needs to contain an active material and a binder, and the type thereof is not particularly limited; however, the binder preferably contains a vinylidene fluoride homopolymer or a vinylidene fluoride polymer B. The vinylidene fluoride polymer B contains: a structural unit derived from vinylidene fluoride; and a structural unit derived from hexafluoropropylene and/or a structural unit derived from a compound represented by the following general formula (2). Hereinafter, each configuration of the electrode will be described.

- Active material

The active material contained in the mixture layer may be a positive electrode active material or a negative electrode active material, and is appropriately selected according to the application.

Examples of the negative electrode active material include a carbon material, such as artificial graphite, natural graphite, non-graphitizable carbon, graphitizable carbon, activated carbon, and a material prepared by carbonizing a phenolic resin, a pitch, and the like by heat treatment; metal and metal alloy materials, such as Cu, Li, Mg, B, Al, Ga, In, Si, Ge, Sn, Pb, Sb, Bi, Cd, Ag, Zn, Hf, Zr, and Y; and metal oxides, such as SiO, $SiO_2$, GeO, $GeO_2$, SnO, $SnO_2$, PbO, $PbO_2$, and $Li_4Ti_5O_{12}$ (LTO). The negative electrode active material may be a material in which these surfaces are coated, and one type thereof may be used alone, or two or more types thereof may be contained. Note that the negative electrode active material may be a commercially available product.

In contrast, examples of the positive electrode active material include a lithium-based positive electrode active material, and examples thereof include a lithium metal oxide represented by the following general formula (3) and a

material prepared by coating the surface thereof.

$$LiM_xO_2 \ldots \quad (3)$$

In the general formula (3), M represents at least one metal element including Ni, and the metal element other than Ni is preferably selected from the group consisting of Co, Al, Fe, Mn, Cr, and V. In addition to Ni, it is more preferable to further contain one type of metal or two or more types of metals selected from the group consisting of Co, Mn, and Al. In the lithium metal oxide represented by the formula (3), when the total of the metal elements included in M is 100 mol%, Ni is contained preferably in an amount of 55 mol% or more, and more preferably in an amount of 70% or more.

In the general formula (3), $0.5 \leq x \leq 1.5$ is satisfied, and $0.7 \leq x \leq 1.3$ is more preferably satisfied.

Examples of the composition of the lithium-based positive active material represented by the general formula (3) and other lithium-based positive active materials include $Li_{1.0}Ni_{0.8}Co_{0.2}O_2$, $Li_{1.0}Ni_{0.5}Mn_{0.5}O_2$, $Li_{1.00}Ni_{0.35}Co_{0.34}Mn_{0.34}O_2$ (NCM111), $Li_{1.00}Ni_{0.52}Co_{0.20}Mn_{0.30}O_2$ (NCM523), $Li_{1.00}Ni_{0.50}Co_{0.30}Mn_{0.20}O_2$ (NCM532), $Li_{1.00}Ni_{0.6}Co_{0.2}Mn_{0.2}O_2$ (NCM622), $Li_{1.00}Ni_{0.83}Co_{0.12}Mn_{0.05}O_2$ (NCM811), $Li_{1.00}Ni_{0.85}Co_{0.15}Al_{0.05}O_2$ (NCA811), $LiCoO_2$ (LCO), $LiMn_2O_4$ (LMO), $LiFePO_4$ (LFP), $LiMnPO_4$ (LMP), and $LiMn_{1-x}Fe_xPO_4$ (LFMP). The positive active material may be a material in which these surfaces are coated, and one type thereof may be used alone, or two or more types thereof may be contained. Note that the positive electrode active material may be a commercially available product.

An amount of the active material contained in the mixture layer is appropriately selected according to the type thereof, the function of the electrode, the type of the battery, and the like, and is not particularly limited, and in one example, the amount is preferably 50.0 mass% or more and 99.9 mass% or less with respect to the total amount of the mixture layer. When the content of the active material is in the range described above, a sufficient charge/discharge capacity can be achieved and good battery performance can be readily achieved, for example.

- Binder

The binder contained in the mixture layer is not particularly limited as long as the binder can bind the active material, and as described above, the binder preferably contains a vinylidene fluoride homopolymer or the vinylidene fluoride polymer B. The vinylidene fluoride polymer B contains: the structural unit derived from vinylidene fluoride; and the structural unit derived from hexafluoropropylene and/or the structural unit derived from the compound represented by the following general formula (2). The binder may contain only the vinylidene fluoride homopolymer, only the vinylidene fluoride polymer B, or both of them. The binder may further contain only one type of the vinylidene fluoride polymer B or may contain two or more types of the vinylidene fluoride polymers B.

The vinylidene fluoride homopolymer that can be used as a binder is the same as a known vinylidene fluoride homopolymer. The method for preparing the vinylidene fluoride homopolymer is not particularly limited, and vinylidene fluoride may be polymerized by a known method. Examples of the polymerization method include suspension polymerization, emulsion polymerization, and solution polymerization.

In contrast, the vinylidene fluoride polymer B is a polymer containing the structural unit derived from vinylidene fluoride and the structural unit derived from hexafluoropropylene and/or the structural unit derived from the compound represented by the general formula (2). The vinylidene fluoride polymer B may be, for example, a copolymer of vinylidene fluoride and hexafluoropropylene, a copolymer of vinylidene fluoride and the compound represented by the general formula (2), or a copolymer of vinylidene fluoride, hexafluoropropylene, and a compound represented by the general formula (2). The vinylidene fluoride polymer B may contain other copolymerization components as long as the object and effect of the present invention are not impaired.

The amount of the structural unit derived from vinylidene fluoride in the vinylidene fluoride polymer B is preferably 50 mol% or more, more preferably 60 mol% or more, and particularly preferably 80 mol% or more with respect to the amount (mol) of all structural units included in the vinylidene fluoride polymer B. When the amount of the structural unit derived from vinylidene fluoride is 50 mol% or more, properties derived from vinylidene fluoride, for example, the electrochemical stability is easily achieved. The amount of the structural unit derived from vinylidene fluoride in the vinylidene fluoride polymer B can be specified by $^{19}F$-NMR.

In contrast, the amount of the structural unit derived from hexafluoropropylene in the vinylidene fluoride polymer B is more preferably 10 mol% or less with respect to the amount (mol) of all the structural units included in the vinylidene fluoride polymer B. When the amount of the structural unit derived from hexafluoropropylene is in the above range, the melting point of the vinylidene fluoride polymer B tends to fall within a desired range, and the adhesive strength between the vinylidene fluoride polymer B and the above-described active material or the like is increased. The amount of the structural unit derived from hexafluoropropylene in the vinylidene fluoride polymer B can be specified by $^{19}F$-NMR.

Next, the general formula (2) will be shown below. The vinylidene fluoride polymer B may contain only one type or two or more types of the structural units derived from the compound represented by the general formula (2).

[Chem. 6]

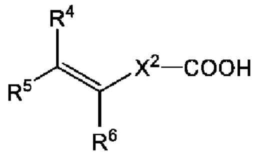

(2)

In the general formula (2), $R^4$ represents a hydrogen atom, an alkyl group having 1 or more and 5 or less carbon atoms, or a carboxy group substituted with the alkyl group having 1 or more and 5 or less carbon atoms. The carboxy group substituted with the alkyl group having 1 or more and 5 or less carbon atoms means a group represented by $-C(=O)-OC_nH_{2n+1}$ (where n is 1 or more and 5 or less). Among them, $R^4$ is preferably a hydrogen atom, a methyl group, or $-C(=O)-OCH_3$ from the viewpoint of polymerization reactivity.

$R^5$ and $R^6$ each independently represent a hydrogen atom or an alkyl group having 1 or more and 5 or less carbon atoms, and from the viewpoint of polymerization reactivity, a substituent with small steric hindrance, hydrogen or an alkyl group having 1 or more and 3 or less carbon atoms, and hydrogen or a methyl group are preferable.

In addition, $X^2$ in the general formula (2) represents a single bond or a divalent atomic group having a molecular weight of 500 or less and the divalent atomic group has a main chain having 1 or more and 20 or less atoms. The number of atoms of the main chain of $X^2$ is the number of atoms constituting the shortest chain connecting the terminal carboxy group in the general formula (2) and a carbon-carbon double bond. The number of atoms of the main chain is more preferably 15 or less.

As long as the atomic group represented by $X^2$ has a molecular weight of 500 or less and satisfies the number of atoms of the main chain as described above, the structure thereof is not particularly limited, and may be linear, branched, or may contain a ring structure. Examples of the structure constituting the atomic group include an alkylene group, a carbonyl group (-C(=O)-), an ether bond (-O-), an aromatic ring, and an alicyclic structure.

Specific examples of the compound represented by the general formula (2) include compounds represented by the general formula (1). In addition, monomethyl maleate (MMM), acrylic acid (AA), methacrylic acid, and the like are included.

The amount of the structural unit derived from the compound represented by the general formula (2) is preferably 0.01 mol% or more and 10 mol% or less, more preferably 0.02 mol% or more and 7 mol% or less, and particularly preferably 0.03 mol% or more and 4 mol% or less with respect to the amount (mol) of all structural units included in the vinylidene fluoride polymer B. When the amount of the structural unit derived from the compound represented by the general formula (2) is 0.01 mol% or more, the adhesive strength between the binder and the active material and the adhesive strength between the mixture layer and the coating layer are increased. In contrast, when the amount of the structural unit derived from the compound represented by the general formula (2) is 10 mol% or less, the amount of the structural unit derived from vinylidene fluoride relatively increases, and the electrochemical stability of the mixture layer tends to be good. The amount of the structural unit derived from the compound represented by the general formula (2) in the vinylidene fluoride polymer B can be analyzed by $^{19}$F-NMR, $^{1}$H-NMR, and the like.

As described above, the vinylidene fluoride polymer B may contain a structural unit derived from a compound other than vinylidene fluoride, hexafluoropropylene, and the compound represented by the general formula (2) (hereinafter, also referred to as "additional compound") in some parts in the range that does not impair the object and effect of the present invention. Specific examples of additional compounds include the additional compounds mentioned in the above description of the vinylidene fluoride polymer A. The amount of structural units derived from additional compounds is preferably 10 mol% or less with respect to the amount (mol) of all structural units included in the vinylidene fluoride polymer B. When the amount of the structural units derived from additional compounds in the vinylidene fluoride polymer B is 10 mol% or less, the electrochemical stability of the mixture layer is easily improved, and the adhesive strength between the mixture layer and the coating layer is easily improved. The amount of structural units derived from additional compounds can be analyzed by $^{19}$F-NMR, $^{1}$H-NMR, and the like.

The method for preparing the vinylidene fluoride polymer B is not particularly limited, and vinylidene fluoride and hexafluoropropylene and/or the compound represented by the general formula (2) may be polymerized by a known method. Examples of the polymerization method include suspension polymerization, emulsion polymerization, and solution polymerization.

The amount of the binder in the mixture layer is appropriately selected according to the composition of the binder, the function of the electrode, the type of the battery, and the like, and is not particularly limited, and in one example, the amount is preferably 0.1 mass% or more and 50 mass% or less with respect to the total amount of the mixture layer. When the amount of the binder is in the range, the adhesive strength between the mixture layer and the coating layer is improved.

Since the amount of the active material is relatively sufficient, a sufficient charge/discharge capacity can be provided, and improved battery performance is readily achieved.

- Additional components

The mixture layer may contain a known dispersant, an adhesive aid, a thickener, and the like in the range that does not impair the object and effect of the present invention. Examples thereof further include phosphorus compounds, sulfur compounds, organic acids, and nitrogen compounds such as amine compounds and ammonium compounds; organic esters, various silane-based, titanium-based, and aluminum-based coupling agents; and resins such as polytetrafluoroethylene (PTFE), styrene-butadiene rubber (SBR), and polyacrylonitrile (PAN). However, the total amount thereof is preferably 15 mass% or less with respect to the total amount of the mixture layer.

- Method for forming mixture layer

The mixture layer can be formed by applying a mixture slurry containing the above-described active material, a binder, if necessary, additional components, and a solvent onto the coating layer of the above-described current collector by a known method, and drying the mixture slurry by a known method.

3. Electrode

The current collector and the electrode described above can be used for various lithium ion secondary batteries and the like, and may be used for other applications.

## EXAMPLES

Hereinafter, specific examples of the present invention will be described together with comparative examples, but the present invention is not limited to these.

1. Provision of material

The following material was provided.

Vinylidene fluoride polymer

Preparation Example 1

In an autoclave with an internal volume of 2 liters, 1096 g of ion-exchanged water, 0.2 g of Metolose 90SH-100 (available from Shin-Etsu Chemical Co., Ltd.), 2.2 g of a 50 mass% diisopropyl peroxydicarbonate-HFE-347pc-f solution, 1.3 g of ethyl acetate, 426 g of vinylidene fluoride, and an initial addition amount of 0.2 g of acryloyloxyethyl succinic acid (AES) were placed, and the temperature was raised to 26°C over a period of 1 hour. Subsequently, a 6 mass% acryloyloxyethyl succinic acid aqueous solution was gradually added at a rate of 0.5 g/min while the temperature was maintained at 26°C. The resulting polymer slurry was dehydrated and dried, resulting in the formation of a vinylidene fluoride copolymer (VDF/AES) containing a polar group. A total of 4.3 g of acryloyloxyethyl succinic acid was added, including the amount added initially.

Preparation Example 2

In an autoclave with an internal volume of 2 liters, 1085 g of ion-exchanged water, 0.2 g of Metolose SM-100 (available from Shin-Etsu Chemical Co., Ltd.), 1.3 g of a 50 mass% diisopropyl peroxydicarbonate-HFE-347pc-f solution, 2.1 g of ethyl acetate, and 424 g of vinylidene fluoride (VDF) were placed, and the temperature was raised to 26°C over a period of 1 hour. Subsequently, polymerization was performed while the temperature was maintained at 26°C. The resulting polymer slurry was dehydrated and dried, resulting in the formation of a vinylidene fluoride polymer (PVDF).

Preparation Example 3

In an autoclave with an internal volume of 2 liters, 1092 g of ion-exchanged water, 0.2 g of Metolose 90SH-100 (available from Shin-Etsu Chemical Co., Ltd.), 3.6 g of a 50 mass% diisopropyl peroxydicarbonate-HFE-347pc-f solution, 5.3 g of ethyl acetate, 423 g of vinylidene fluoride, and an initial addition amount of 0.2 g of acryloyloxyethyl succinic acid

(AES) were placed, and the temperature was raised to 26°C over a period of 1 hour. Subsequently, a 5 mass% acryloyloxyethyl succinic acid aqueous solution was gradually added at a rate of 0.6 g/min while the temperature was maintained at 26°C. The resulting polymer slurry was dehydrated and dried, resulting in the formation of a vinylidene fluoride copolymer (VDF/AES) containing a polar group. A total of 4.2 g of acryloyloxyethyl succinic acid was added, including the amount added initially.

Preparation Example 4

In an autoclave with an internal volume of 2 liters, 1081 g of ion-exchanged water, 0.8 g of Metolose SM-100 (available from Shin-Etsu Chemical Co., Ltd.), 2.0 g of a 50 mass% diisopropyl peroxydicarbonate-HFE-347pc-f solution, 12.9 g of hexafluoropropylene (HFP), 415 g of vinylidene fluoride (VDF), and 1.3 g of monomethyl maleate (MMM) were placed, and the temperature was raised to 29°C over a period of 1 hour. Subsequently, polymerization was performed while the temperature was maintained at 29°C. The resulting polymer slurry was dehydrated and dried, resulting in the formation of a vinylidene fluoride copolymer (VDF/HFP/MMM).

Preparation Example 5

In an autoclave with an internal volume of 2 liters, 1091 g of ion-exchanged water, 0.2 g of Metolose SM-100 (available from Shin-Etsu Chemical Co., Ltd.), 5.1 g of a 50 mass% diisopropyl peroxydicarbonate-HFE-347pc-f solution, 7.7 g of ethyl acetate, and 426 g of vinylidene fluoride (VDF) were placed, and the temperature was raised to 26°C over a period of 1 hour. Subsequently, polymerization was performed while the temperature was maintained at 26°C. The resulting polymer slurry was dehydrated and dried, resulting in the formation of a vinylidene fluoride polymer (PVDF).

Preparation Example 6

In an autoclave with an internal volume of 2 liters, 1009 g of ion-exchanged water, 0.2 g of Metolose SM-100 (available from Shin-Etsu Chemical Co., Ltd.), 5.1 g of a 50 mass% diisopropyl peroxydicarbonate-HFE-347pc-f solution, 9.3 g of ethyl acetate, 420 g of vinylidene fluoride (VDF), and an initial addition amount of 0.2 g of acryloyloxyethyl succinic acid (AES) were placed, and the temperature was raised to 26°C over a period of 1 hour. Subsequently, a 5 mass% acryloyloxyethyl succinic acid aqueous solution was gradually added at a rate of 0.7 g/min while the temperature was maintained at 26°C. The resulting polymer slurry was dehydrated and dried, resulting in the formation of a vinylidene fluoride copolymer (VDF/AES) containing a polar group. A total of 4.2 g of acryloyloxyethyl succinic acid was added, including the amount added initially.

Preparation Example 7

In an autoclave with an internal volume of 2 liters, 987 g of ion-exchanged water, 0.2 g of Metolose SM-100 (available from Shin-Etsu Chemical Co., Ltd.), 8.8 g of a 50 mass% diisopropyl peroxydicarbonate-HFE-347pc-f solution, 0.8 g of ethyl acetate, 405 g of vinylidene fluoride (VDF), and 4.1 g of monomethyl maleate (MMM) were placed, and the temperature was raised to 29°C over a period of 1 hour. Subsequently, polymerization was performed while the temperature was maintained at 29°C. The resulting polymer slurry was dehydrated and dried, resulting in the formation of a vinylidene fluoride copolymer (VDF/MMM) containing a polar group.

Preparation Example 8

In an autoclave with an internal volume of 2 liters, 900 g of ion-exchanged water, 0.4 g of hydroxypropyl methylcellulose, 2 g of butyl peroxypivalate, 396 g of vinylidene fluoride, and an initial addition amount of 0.2 g of acrylic acid were placed, and the mixture was heated to 50°C. A 1 wt.% acrylic acid aqueous solution containing acrylic acid was continuously supplied to a reaction vessel under a condition of maintaining a constant pressure during polymerization. The resulting polymer slurry was dehydrated and dried, resulting in the formation of a vinylidene fluoride copolymer (VDF/AA) containing a polar group. A total of 4 g of acrylic acid was added, including the initially added amount.

2. Preparation of electrode

Example 1

- Preparation of coating layer

A coating layer vinylidene fluoride polymer shown in Table 1 was dissolved in N-methyl-2-pyrrolidone (hereinafter, referred to as NMP) to prepare a vinylidene fluoride polymer solution containing 6 mass% of the vinylidene fluoride polymer. Thereafter, Super-P available from Timcal Japan K.K. as the conductive auxiliary and NMP were added to the polymer solution to prepare a coating liquid having a solid content concentration of 4 mass%. The mass ratio of Super-P and the vinylidene fluoride polymer in the coating liquid was 50:50 in this order. The resulting coating liquid was applied onto an aluminum foil (substrate) having a thickness of 15 $\mu$m as a current collector using a TH-C type coater available from THANK METAL and dried, resulting in the formation of a coating layer having a basis weight of 1.4 g/m$^2$.

- Preparation of mixture layer

A mixture layer vinylidene fluoride polymer shown in Table 1 was dissolved in NMP to prepare a vinylidene fluoride polymer solution containing 6 mass% of the vinylidene fluoride polymer. Thereafter, a CNT (carbon tube) dispersion (NMP mixed solution containing 4.3 mass% of MWCNT having a tube diameter of 7 nm and a specific surface area of 300 m$^2$/g) as the conductive auxiliary and NMP were added to the polymer solution, and mixed. Subsequently, LFP (lithium iron phosphate, primary particle size: D50: 2 $\mu$m, specific surface area: 19.9 m$^2$/g) was added so that the solid content concentration was 55 mass%, and mixed to prepare a mixture slurry. The mass ratio of the positive electrode active material, the CNT, and the vinylidene fluoride polymer in the mixture slurry was 100:2:2 in this order. The resulting mixture slurry was applied onto the coating layer using a TH-C type coater available from THANK METAL and dried, resulting in the formation of a mixture layer having a basis weight of about 150 g/m$^2$.

Examples 2 to 10 and Comparative Examples 1 to 2

An electrode was produced in the same manner as in Example 1 except that the type and amount of the vinylidene fluoride polymer in the coating liquid used for formation of the coating layer, the type and amount of the vinylidene fluoride polymer in the mixture slurry used for formation of the mixture layer, and the like were changed as shown in Table 1.

Reference Example

An electrode was produced in the same manner as in Example 1 except that the coating layer was not formed and a mixture layer was formed directly on the substrate.

3. Evaluation

Various physical properties were measured and evaluated as follows.

- Measurement of inherent viscosity

The inherent viscosity of the vinylidene fluoride polymer used in Examples and Comparative Examples described above was measured as follows. First, 80 mg of the vinylidene fluoride polymer was dissolved in 20 mL of N,N-dimethylformamide, and the viscosity was measured by using an Ubbelohde viscometer in a 30°C thermostatic bath. Subsequently, based on the measured value, the inherent viscosity ($\eta_i$) of the vinylidene fluoride polymer was calculated by the following equation:

$$\eta_i = (1/C)\bullet\ln(\eta/\eta_0)$$

In the equation, $\eta$ is a viscosity of the solution, $\eta_0$ is a viscosity of N,N-dimethylformamide alone, which is a solvent, and C is a concentration of the vinylidene fluoride polymer, that is, 0.4 g/dL.

- Electrode state

After the formation of the mixture layer, the mixture layer was visually observed, and evaluated as × when cracking was observed, as Δ when slight cracking was observed, and as ◦ when no cracking was observed. When the electrode was pressed by a roll press and the electrode density was adjusted to 2.3 g/cm$^3$, the cracking of the mixture layer in the electrode state Δ were repaired and no longer observed. In contrast, in the mixture layer in the electrode state ×, cracking was not repaired even when roll pressing was similarly performed.

- Peel Strength Measurement

After the roll pressing, the peel strength was measured for the electrodes in which no cracking was observed (those in the electrode state of ◦ and Δ). The electrode was cut into a size having a length of 50 mm and a width of 20 mm, and a 90 degree peel test was conducted at a head speed of 10 mm/min using a tensile tester ("STB-1225S" available from A&D Company, Limited) in accordance with JIS K6854-1 to measure the peel strength (gf/mm). When the sample had low peel strength and peeling off from the substrate was observed before the measurement, the sample was expressed as "unmeasurable".

[Table 1]

| | Coating layer | | | Mixture layer | | | Electrode state | Peel strength (gf/mm) |
|---|---|---|---|---|---|---|---|---|
| | Vinylidene fluoride polymer | Inherent viscosity (dl/g) | Conductive auxiliary/vinylidene fluoride polymer ratio (mass ratio) | Vinylidene fluoride polymer | Inherent viscosity (dl/g) | Active material/vinylidene fluoride polymer ratio (mass) | | |
| Example 1 | Preparation Example 1 | 2.5 | 50/50 | Preparation Example 2 | 3.1 | 2 | ○ | 3.1 |
| Example 2 | Preparation Example 1 | 2.5 | 70/30 | Preparation Example 2 | 3.1 | 2 | ○ | 1.3 |
| Example 3 | Preparation Example 1 | 2.5 | 80/20 | Preparation Example 2 | 3.1 | 2 | ○ | 0.7 |
| Example 4 | Preparation Example 1 | 2.5 | 90/10 | Preparation Example 2 | 3.1 | 2 | ○ | 0.2 |
| Example 5 | Preparation Example 1 | 2.5 | 40/60 | Preparation Example 2 | 3.1 | 2 | △ | 3.2 |
| Example 6 | Preparation Example 3 | 1.8 | 50/50 | Preparation Example 2 | 3.1 | 2 | ○ | 0.9 |
| Example 7 | Preparation Example 6 | 1.1 | 50/50 | Preparation Example 2 | 3.1 | 2 | ○ | 0.2 |
| Example 8 | Preparation Example 1 | 2.5 | 50/50 | Preparation Example 1 | 2.5 | 1 | ○ | 2.7 |
| Example 9 | Preparation Example 1 | 2.5 | 50/50 | Preparation Example 4 | 3.1 | 2 | ○ | 4.0 |
| Example 10 | Preparation Example 1 | 2.5 | 50/50 | Preparation Example 5 | 1.1 | 2 | ○ | 2.3 |
| Comparative Example 1 | Preparation Example 7 | 1.1 | 50/50 | Preparation Example 2 | 3.1 | 2 | × | - |
| Comparative Example 2 | Preparation Example 8 | 2.5 | 50/50 | Preparation Example 2 | 3.1 | 2 | × | - |
| Reference Example | No coat | - | - | Preparation Example 2 | 3.1 | 2 | ○ | Unmeasurable |

As shown in Table 1 above, in Example 1 to 10 in which the coating layer containing the vinylidene fluoride polymer A containing the structural unit derived from vinylidene fluoride and the structural unit derived from the compound represented by the general formula (1) and the conductive auxiliary was provided on the substrate, the peel strength was higher as compared with the case where the coating layer was not provided.

When the vinylidene fluoride polymer in the coating layer did not contain a structural unit derived from the compound represented by the general formula (1), cracking occurred on the surface of the mixture layer (Comparative Examples 1 and 2). In contrast, when the vinylidene fluoride polymer contained the structural unit derived from the compound represented by the general formula (1), cracking did not occur (Examples 1 to 4, Examples 6 to 10), or although slight cracking was observed, cracking disappeared by roll pressing (Example 5).

The present application claims priority from the Japanese patent application No. 2022-156630 filed on September 29, 2022. The contents described in the specification of the foregoing application are all incorporated in the specification of the present application by reference.

## INDUSTRIAL APPLICABILITY

In the current collector of the present invention, when a mixture layer is formed on the current collector to form an electrode, cracking hardly occurs on the surface of the electrode, and a high-quality electrode or battery can be manufactured. Therefore, the current collector is very useful for manufacturing a lithium ion secondary battery and the like.

## Claims

**1.** A current collector comprising:

a substrate containing a metal; and
a coating layer disposed on at least one surface of the substrate,
wherein
the coating layer contains a vinylidene fluoride polymer A and a conductive auxiliary, and
the vinylidene fluoride polymer A contains a structural unit derived from vinylidene fluoride and a structural unit derived from a compound represented by general formula (1):

[Chem. 1]

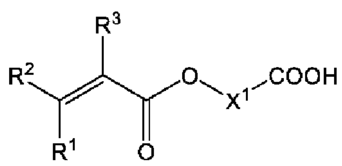

(1)

where

$R^1$, $R^2$, and $R^3$ each independently represent a hydrogen atom, a chlorine atom, a fluorine atom, or an alkyl group having 1 or more and 5 or less carbon atoms, and
$X^1$ represents a divalent atomic group having a molecular weight of 156 or less, and the divalent atomic group has a main chain having 1 or more and 6 or less atoms.

**2.** The current collector according to claim 1, wherein when a total amount of the vinylidene fluoride polymer A and the conductive auxiliary in the coating layer is 100 parts by mass, an amount of the vinylidene fluoride polymer A is 65 parts by mass or less.

**3.** An electrode comprising:

the current collector described in claim 1 or 2; and
a mixture layer containing an active material and a binder, the mixture layer being disposed on the coating layer of the current collector.

**4.** The electrode according to claim 3, wherein

the binder contains a vinylidene fluoride homopolymer and/or a vinylidene fluoride polymer B, and the vinylidene fluoride polymer B contains:

a structural unit derived from vinylidene fluoride; and
a structural unit derived from hexafluoropropylene and/or a structural unit derived from a compound represented by general formula (2):

[Chem. 2]

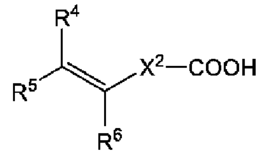

(2)

where

$R^4$ represents a hydrogen atom, an alkyl group having 1 or more and 5 or less carbon atoms, or a carboxy group substituted with an alkyl group having 1 or more and 5 or less carbon atoms,
$R^5$ and $R^6$ each independently represent a hydrogen atom or an alkyl group having 1 or more and 5 or less carbon atoms, and
$X^2$ represents a single bond or a divalent atomic group having a molecular weight of 500 or less, and the divalent atomic group has a main chain having 1 or more and 20 or less atoms.

**5.** A battery comprising the electrode described in claim 3.

**6.** A method for producing a current collector, the method comprising applying a coating liquid to at least one surface of a substrate containing a metal, the coating liquid containing a vinylidene fluoride polymer a and a solvent, wherein the vinylidene fluoride polymer a contains a structural unit derived from vinylidene fluoride and a structural unit derived from a compound represented by general formula (1a):

[Chem. 3]

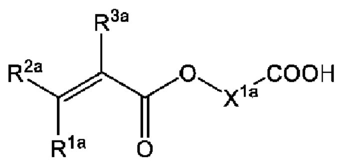

(1 a)

where

$R^{1a}$, $R^{2a}$, and $R^{3a}$ each independently represent a hydrogen atom, a chlorine atom, a fluorine atom, or an alkyl group having 1 or more and 5 or less carbon atoms, and
$X^{1a}$ represents a divalent atomic group having a molecular weight of 156 or less, and the divalent atomic group has a main chain having 1 or more and 6 or less atoms.

## INTERNATIONAL SEARCH REPORT

International application No.
**PCT/JP2023/033923**

**A. CLASSIFICATION OF SUBJECT MATTER**

***H01M 4/66***(2006.01)i; ***H01M 4/13***(2010.01)i; ***H01M 4/62***(2006.01)i
FI: H01M4/66 A; H01M4/13; H01M4/62 Z

According to International Patent Classification (IPC) or to both national classification and IPC

**B. FIELDS SEARCHED**

Minimum documentation searched (classification system followed by classification symbols)

H01M4/66; H01M4/13; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-190527 A (SHOWA DENKO KK) 29 November 2018 (2018-11-29) | 1-6 |
| A | JP 2020-198275 A (SHOWA DENKO KK) 10 December 2020 (2020-12-10) | 1-6 |
| A | WO 2016/167294 A1 (KUREHA CORPORATION) 20 October 2016 (2016-10-20) | 1-6 |
| A | KR 10-2018-0004021 A (LG CHEM, LTD.) 10 January 2018 (2018-01-10) | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033923**

| Patent document cited in search report | Publication date (day/month/year) | Patent family member(s) | Publication date (day/month/year) |
|---|---|---|---|
| JP 2018-190527 A | 29 November 2018 | (Family: none) | |
| JP 2020-198275 A | 10 December 2020 | (Family: none) | |
| WO 2016/167294 A1 | 20 October 2016 | US 2018/0248193 A1<br>EP 3285316 A1<br>KR 10-2017-0103965 A<br>CN 107408699 A | |
| KR 10-2018-0004021 A | 10 January 2018 | US 2018/0006289 A1<br>CN 107565092 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6529700 B
- WO 2013151046 A
- JP 2022156630 A